# EUROPEAN PATENT APPLICATION

(11) **EP 2 083 306 A1**
(43) Date of publication of application: **29.07.2009**
(21) Application number: 08703333.8
(22) Date of filing: 09.01.2008
(51) Int. Cl.: G02B 23/18

(54) **BINOCULARS**

(30) Priority: 11.01.2007 JP 2007003571
(71) Applicant: Nikon Vision Co., Ltd., Tokyo 142-0043 (JP)
(72) Inventor: YAMAMOTO, Mitsuo, Tokyo 100-8331 (JP)
(74) Representative: Weser, Wolfgang
(86) International application number: PCT/JP2008/050473
(87) International publication number: WO 2008/084877

(57) **Abstract**

A pair of binoculars is provided with a second bridge portion on which a portion for fitting an adapter for attaching a tripod is provided near to the center of gravity of the binoculars with a given space in the optical axis direction from a first bridge portion that is provided to the objective lens side, thereby capable of preventing a shake upon attaching a tripod through the adapter.

## Description

### Technical Field

The present invention relates to a pair of binoculars.

### Background Art

In order to attach a pair of binoculars to a tripod, an adapter for attaching to a tripod (hereinafter simply called "an adapter") has been used. The adapter is fitted to a pair of binoculars by an adapter fitting screw. Generally, the adapter fitting screw is screwed to a bridge portion that connects left and right lens barrels. This is done so as not to effect configuration of telescopic optical systems, or obstruct observation upon holding the binoculars. In order to secure strength of the bridge portion and accuracy between the optical axes upon adjusting interpupillary distance, the dimension in the optical axis direction of the bridge portion is large. A focus knob for carrying out focusing is provided on the bridge portion. The focus knob is often provided on a side thereof closer to the eye, in other words, near to the eyepiece so as to be easy to operate upon holding the binoculars. Accordingly, the adapter fitting screw often comes to a side of the bridge portion farther from the eye, in other words, the objective lens side (for example, see Japanese Patent Application Laid-Open No. 2002-072104).

The position of the center of gravity of a pair of binoculars comes closer to the eye side than the objective lens side. In a pair of binoculars having erecting prism in particular, the center of gravity comes further closer to the eye. Accordingly, when the adapter fitting screw is provided to one side of the bridge portion farther from the eye, the adapter is fitted to a position away from the center of gravity, so that upon attaching the pair of binoculars to a tripod through the adapter, the pair of binoculars attached to the tripod becomes unstable. As a result, the pair of binoculars becomes easy to shake caused by a vibration from the ground or the wind, or touched by the observer. Moreover, the shake is difficult to be suppressed. Furthermore, when the observation direction of the binoculars is to be corrected, the adjustment of the posture of the binoculars becomes difficult upon changing the posture of the binoculars.

### Disclosure of the Invention

The present invention is made in view of the aforementioned problems, and has an object to provide a pair of binoculars capable of observing an object without being affected by a shake upon attaching the binoculars to a tripod through an adapter.

In order to accomplish the object, the present invention provides a pair of binoculars comprising: a pair of lens barrels each of which includes a telescopic optical system including an eyepiece and an objective lens; a first and a second bridge portions holding the pair of lens barrels; the first bridge portion being disposed to the objective lens side in an optical axis direction of the telescopic optical system, and the second bridge portion being disposed to the eyepiece side with a given space in the optical axis direction from the first bridge portion; wherein an portion for fitting an adapter for attaching to a tripod is provided to the second bridge portion.

According to the present invention, it becomes possible to provide a pair of binoculars capable of observing an object without being effected by a shake upon attaching the binoculars to a tripod through an adapter.

### Brief Description of the Drawings

Fig. 1 is a plan view showing a pair of binoculars according to an embodiment of the present invention.
Fig. 2 is a side view showing a state where an adapter for attaching to a tripod is fitted to the pair of binoculars.
Fig. 3 is a partially sectioned view showing the vicinity of an adapter fitting screw seen from the same direction as Fig. 1 upon attaching the adapter for attaching to a tripod.
Fig. 4 is a plan view showing a state where a camera is attached to one of lens barrels of a pair of binoculars through an adapter for attaching a camera to the pair of binoculars.

### The Embodiment for Carrying out the Invention

An embodiment of the present invention is explained with reference to accompanying drawings.

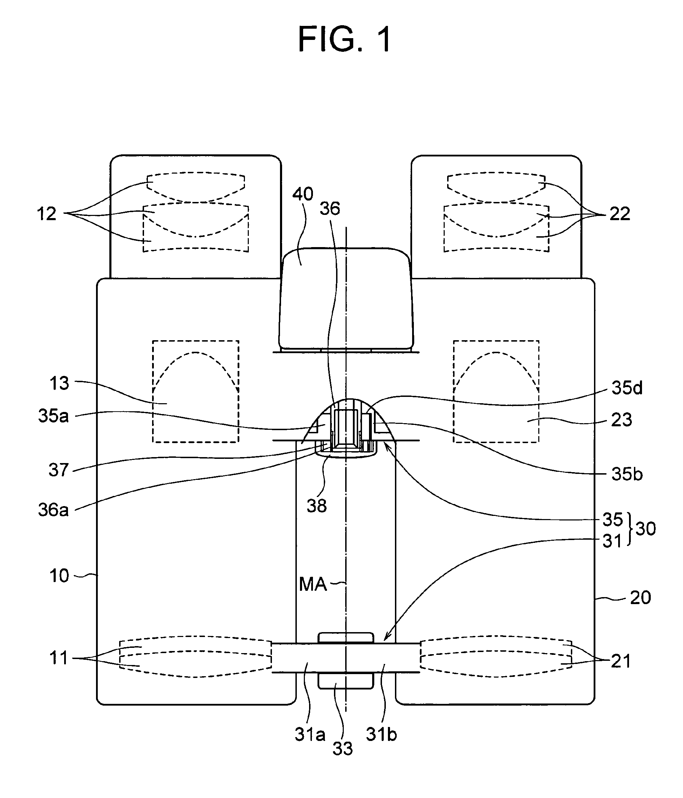

Fig. 1 is a plan view showing a pair of binoculars according to an embodiment of the present invention, and a portion thereof is shown by a partially sectioned view.

The pair of binoculars includes a pair of left and right lens barrels 10, 20 in each of which a telescopic optical system is held, and a bridge portion 30 that connects and juxtaposes both of lens barrels.

The lens barrel 10 holds an objective lens 11, an eyepiece 12, and an erecting prism 13 disposed on an optical path between the objective lens 11 and the eyepiece 12, and a telescopic optical system is composed of the objective lens 11, the eyepiece 12, and the erecting prism 13. Moreover, the lens barrel 20 holds an objective lens 21, an eyepiece 22, and an erecting prism 23 disposed on an optical path between the objective lens 21 and the eyepiece 22, and a telescopic optical system is composed of the objective lens 21, the eyepiece 22, and the erecting prism 23. The erecting prisms 13, 23 are made of glass blocks.

The bridge portion 30 is composed of a first bridge portion 31 and a second bridge portion 35.

The first bridge portion 31 connects the lens barrels 10, 20 in the vicinity of the objective lens 11, 21 and at the objective lens side in the optical axis direction. The first bridge portion 31 is composed of bridge members 31a, 31b integrally provided on the respective lens barrels 10, 20, a center shaft (not shown), and a washer (not shown). Bridge members 31a, 31b rotatably connected through the center shaft (not shown) so as to be able to rotate centering on an axis MA for adjusting interpupillary distance at the center of both of the lens barrels 10, 20. By tightening a torque nut (not shown) friction force is generated between the bridge members 31a, 31b and the washer (not shown). A cap 33 is provided on the torque nut.

The above-described configuration connecting both of the bridge members 31a, 31b through the center shaft (not shown) is the same as a configuration connecting both of bridge members 35a, 35b of the second bridge portion and a center shaft 36, which is explained later, and carries out similar movement as the second bridge portion.

The second bridge portion 35 connects both of the lens barrels 10, 20 on the eyepiece 12, 22 side with a given space in the optical axis direction from the first bridge portion 31. The second bridge portion 35 connects bridge members 35a, 35b integrally provided on the respective lens barrels 10, 20 in the vicinity of the erecting prisms 13, 23, respectively.

Since the second bridge portion 35 connects both of the lens barrels 10, 20 in the vicinity of the erecting prisms 13, 23, the second bridge portion 35 is located near to the position of the center of gravity of the binoculars composed of lens barrels 10, 20 and the bridge portion 30.

The second bridge portion 35 is composed of the bridge members 35a, 35b integrally provided on the respective lens barrels 10, 20, the center shaft 36 and a washer 35d. The bridge members 35a, 35b are connected together through the center shaft 36 rotatably centering on the axis MA for adjusting interpupillary distance. Holes 35a-1, 35b-1 are formed in the optical axis direction on the respective bridge members 35a, 35b. The center shaft 36 is inserted into the holes such that the hole 35a-1 of the bridge member 35a and the hole 35b-1 of the bridge member 35b lie in a row on the same axis in the optical axis direction. In this manner, the center shaft 36 is fitted into the holes 35a-1, 35b-1 of the bridge members 35a, 35b, and rotatably holds bridge members 35a, 35b centering on the center shaft 36. The washer 35d lies between the bridge members 35a and 35b on the outer circumference side of the center shaft 36.

By tightening a torque nut 37 to a male screw 36a formed on the outer circumference of the center shaft 36, the bridge member 35a is pressed in the optical axis direction to the bridge member 35b with the washer 35d in between, so that friction force is generated between the bridge members 35a, 35b and washer 35d. The magnitude of the friction force is such that an angle formed by the left and right lens barrels 10, 20 is securely kept to a given angle with overcoming the weight of the left and right lens barrels 10, 20, and the left and right lens barrels 10, 20 can be rotated centering on the axis MA with adding given external force. In this manner, the second bridge portion has a joint mechanism formed by the center shaft 36, the bridge members 35a, 35b, the center shaft 36, and the washer 35d, and makes it possible to bend the bridge member 35a and the bridge member 35b to a given angle centering on the axis MA.

Accordingly, interpupillary distance can be adjusted by rotating the left and right lens barrels 10, 20 centering on the axis MA.

A cap 38 is fitted on the outer circumference of the torque nut 37. A string (not shown) is attached to the cap 38, and the other end of the string is fixed to a portion of the second bridge portion 35. A screw 39 for fitting an adapter for attaching to a tripod (hereinafter simply called "an adapter") is formed on the inner circumference of the center shaft 36. The adapter fitting screw 39 is a female screw formed on the inner circumference of the center shaft 36. The adapter fitting screw 39 is formed on the same axis as the axis MA.

A focus knob 40 for focusing is provided to the eyepiece 12, 22 side of the second bridge portion 35.

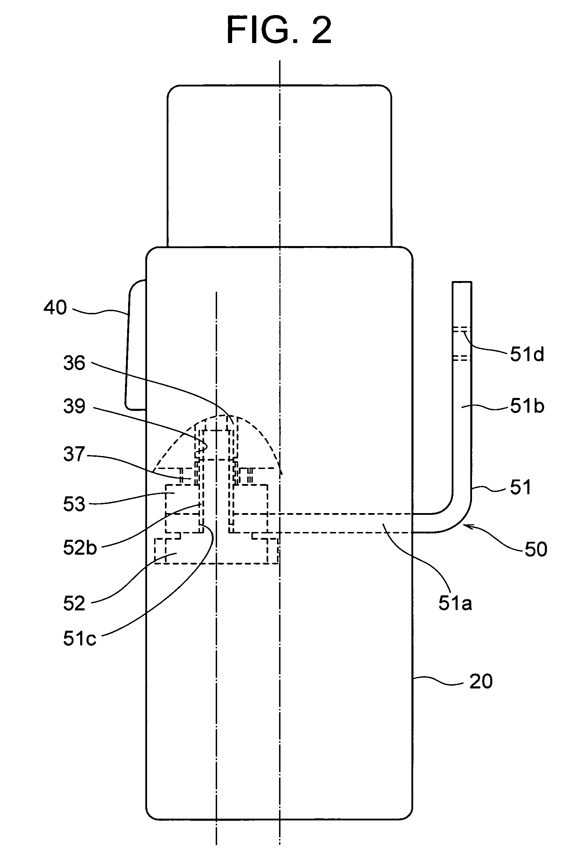

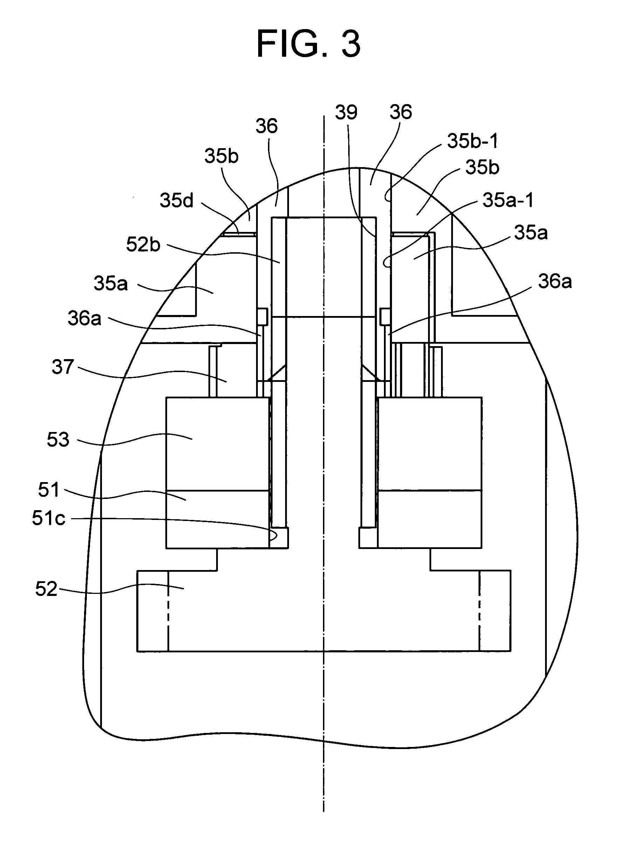

Fig. 2 is a side view showing a state where an adapter 50 is attached to a pair of binoculars. Fig. 3 is a partially sectioned view showing the vicinity of an adapter fitting screw 39 seen from the same direction as Fig. 1 upon attaching the adapter 50.

The adapter 50 is composed of an adapter main body 51, a screw member 52, and a retaining washer 53.

The adapter main body 51 has an L-shape, and includes a vertical portion 51a and a horizontal portion 51b. The screw member 52 is rotatably attached to a hole 51c formed on the vertical portion 51a. A male screw 52b capable of screwing with the adapter fitting screw 39 is formed on the screw member 52. The retaining washer 53 for preventing the screw member 52 from coming out from the adapter main body 51 is provided to the male screw 52b. A screw is formed on the retaining washer 53 for preventing the screw member 52 from coming out from the adapter main body 51 by means of the retaining washer 53 and the screw member 52.

A female screw 51d for attaching the adapter main body 51 to a tripod (not shown) is formed on the horizontal portion 51b.

The way to use the adapter 50 is explained.

At first, the adapter 50 is attached to a tripod by inserting a male screw to the female screw 51d of the adapter main body 51.

Then, the cap 38 of the second bridge portion is removed. Incidentally, since the cap 38 is fixed to the second bridge portion by the string (not shown), the trouble to keep the cap 38 to another place can be saved upon using the binoculars attaching to the tripod.

Then, the male screw 52b of the screw member 52 is screwed into the adapter fitting screw 39.

As a result, the pair of binoculars is attached to the tripod through the adapter 50.

In the present embodiment, since the adapter 50 is fitted to the second bridge portion 35 of the pair of binoculars that the left and right lens barrels 10, 20 are connected by the first and second bridge portions 31, 35, when the pair of binoculars is attached to the tripod through the adapter 50, the pair of binoculars is held by the tripod nearer to the center of gravity than a conventional case. Accordingly, a shake of the binoculars can be prevented. In other words, vibration from the ground or wind, or vibration of the binoculars with large amplitude caused by touched by the observer can be rapidly suppressed, so that observation can be continued without affected by vibration. Moreover, when the observation direction of the binoculars is to be corrected, adjustment of the posture of the binoculars becomes easy upon changing the posture of the binoculars in the state attaching the binoculars to the tripod, so that the posture can easily be corrected.

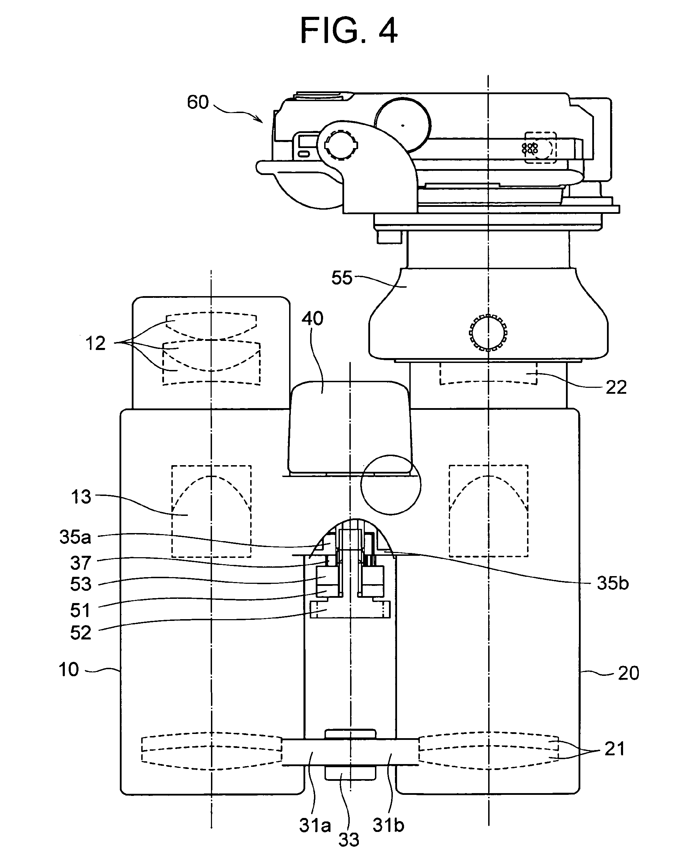

In the present embodiment, an imaging apparatus such as an electronic still camera can be attached to at least one of the lens barrels of the binoculars through an adapter for attaching a camera. The situation is shown in Fig. 4.

A camera 60 is attached to an eyepiece 22 side of one lens barrel 20 through an adapter 55. In this case, the position of center of gravity moves closer to the eyepiece 22 side as shown by a circle that a case where the camera 60 is not attached. However, the position of the center of gravity is in the vicinity of the adapter fitting screw 39 as shown in Fig. 4.

On the other hand, when the adapter for attaching to a tripod is fitted to the first bridge portion as shown in conventional case, since the distance between the adapter fitting position and the center of gravity becomes large upon attaching a camera, a shake of the binoculars such as vibration from the ground or the wind, or vibration of the binoculars with large amplitude caused by touched by the observer cannot be rapidly suppressed, so that it becomes impossible to take a picture with a slow shutter speed. On the contrary, in the present invention, since the adapter 50 can be fitted to the second bridge portion 35, the distance between the position of the adapter 50 and the center of gravity upon attaching the camera 60 can be shortened, so that such an effect can be suppressed. As a result, it becomes possible to take a picture with a slow shutter speed. The camera 60 may be attached to the other lens barrel 10 that is opposite to the case shown in Fig. 4.

In the present embodiment, although the adapter fitting screw 39 that is the position where the adapter is fitted is disposed to the objective lens side among two sides in the optical axis direction of the second bridge portion, the fitting portion can be provided at the central portion of the second bridge portion (for example, lower surface of the second bridge portion).

## Claims

1. A pair of binoculars comprising:
a pair of lens barrels each of which includes a telescopic optical system including an eyepiece and an objective lens;
a first and a second bridge portions holding the pair of lens barrels;
the first bridge portion being disposed to the objective lens side in an optical axis direction of the telescopic optical system, and the second bridge portion being disposed to the eyepiece side with a given space in the optical axis direction from the first bridge portion;
wherein a portion for fitting an adapter for attaching a tripod is provided to the second bridge portion.

2. The pair of binoculars according to claim 1, wherein the portion for fitting the adapter for attaching a tripod is provided to the first bridge portion side surface of the second bridge portion.

3. The pair of binoculars according to claim 1, wherein the telescopic optical system held in each of the pair of lens barrels includes an erecting prism held by the lens barrel between the eyepiece and the objective lens; and
wherein a position where the erecting prism is held is closer to a position where the second bridge portion connects the pair of lens barrels than a position where the first bridge portion does.

4. The pair of binoculars according to claim 1, wherein the second bridge portion has a joint mechanism capable of being bent centering on an axis, and the adapter is provided on the same axis as the axis of the joint mechanism.
